# DEMANDE DE BREVET EUROPEEN

(11) **EP 0 855 331 A1**
(43) Date de publication de la demande: **29.07.1998**
(21) Numéro de dépôt: 98410001.6
(22) Date de dépôt: 14.01.1998
(51) Int. Cl.: B62B 3/14

(54) **Support pour liste d'achats**

(30) Priorité: 14.01.1997 FR 9700509
(71) Demandeur: Babaz, Michel, 05100 Briançon (FR)
(72) Inventeur: Babaz, Michel, 05100 Briançon (FR)
(74) Mandataire: Gasquet, Denis

(57) **Abrégé**

Support pour liste d'achats (1) comportant un corps de dispositif (4) destiné à pouvoir être accroché à un chariot de magasin (2) équipé d'un système de consigne (13), caractérisé en ce qu'il comporte des moyens d'accrochage et de verrouillage (MAV) destinés à permettre la libération du chariot (2), l'accrochage dudit dispositif (1), et son verrouillage audit chariot lors de l'utilisation de celui-ci et la restitution automatique du dispositif à l'usager par son déverrouillage lors de la remise en place dudit chariot.

## Description

La présente invention concerne un support pour liste d'achats destiné à être mis en place sur un chariot de magasin, plus couramment appelé "caddie" (Marque déposée), afin que l'utilisateur puisse effectuer aisément les achats de sa liste.

On connaît des supports pour liste d'achats comme ceux décrits dans les brevets GB-A-246 322 ou FR-A-2 638 681 ou, par exemple, dans le brevet français FR-A-2 702 179 de la demanderesse. Les deux premiers documents décrivent un dispositif constitué par une plaque rigide destinée à être fixée à la poignée du chariot, et sur laquelle on dispose une liste d'achats à effectuer. Lesdits dispositifs présentent de nombreux inconvénients comme, par exemple, leur encombrement qui ne facilite ni leur transport, ni leur rangement au domicile de l'utilisateur.

Dans le brevet français FR-A-2 702 179 de la demanderesse, le dispositif décrit remédie partiellement aux inconvénients des solutions proposées par l'art antérieur. Cependant, il comporte encore quelques inconvénients comme son système d'accrochage au chariot qui n'empêche ni le décrochage accidentel, ni le vol du support de liste d'achats. De plus, ledit système d'accrochage n'empêche pas l'utilisateur d'oublier le support pour liste d'achats sur la poignée du chariot, malgré le logement prévu sur le corps dudit support pour ranger une pièce de monnaie destinée à la consigne du chariot.

La présente demande se propose de remédier aux divers inconvénients précités en présentant un support pour liste d'achats pratique d'utilisation, peu encombrant, qu'on ne peut voler et que l'utilisateur ne peut oublier sur le chariot.

Ainsi, le support pour liste d'achats selon l'invention comporte un corps de dispositif destiné à pouvoir être accroché à un chariot de magasin équipé d'un système de consigne et est caractérisé en ce qu'il comporte des moyens d'accrochage et de verrouillage destinés à permettre la libération du chariot, l'accrochage dudit dispositif et son verrouillage audit chariot lors de l'utilisation de celui-ci et la restitution automatique du dispositif à l'usager par son déverrouillage lors de la remise en place dudit chariot.

Selon une autre caractéristique, les moyens d'accrochage et de verrouillage sont constitués par un jeton ou pièce de consigne solidaire dudit dispositif destiné à coopérer avec un système de consigne d'un chariot de magasin.

En outre, il comporte des moyens de liaison (ML) permettant de solidariser le jeton de consigne au corps du dispositif.

Selon une caractéristique complémentaire, les moyens de liaison sont constitués par une languette de fixation comportant des moyens d'accrochage complémentaires constitués par une fente transversale destinée à permettre l'accrochage du dispositif à des chariots non équipés de système de consigne.

Selon un mode de réalisation préféré, le support pour liste d'achats comporte
- un corps de dispositif constitué d'au moins deux portions de plaque, de formes sensiblement identiques, articulées entre elles de manière à pouvoir se superposer en apposant leurs faces internes l'une contre l'autre,
- des moyens d'écriture.

Selon une variante, le corps de dispositif est réalisé dans un matériau sur lequel il est possible d'écrire et d'effacer son écriture en utilisant soit des moyens d'écriture spécifiques audit matériau, soit des moyens d'écriture classiques.

Selon une autre caractéristique, le support pour liste d'achats comporte des moyens de retenue destinés à permettre la fixation d'une feuille ou d'un bloc de feuilles contre au moins une des faces internes des portions de plaques.

Selon le mode cie réalisation préféré, le jeton de consigne est muni d'un trou destiné à coopérer avec un téton de fermeture disposé sur une des portions de plaque, de manière à permettre l'immobilisation desdites portions de plaque lorsqu'elles sont en position superposée.

D'autres caractéristiques et avantages de l'invention se dégageront de la description qui va suivre en regard des dessins annexés qui ne sont donnés qu'à titre d'exemples non limitatifs.

Les figures 1 à 6 illustrent le mode de réalisation préféré de l'invention.

La figure 1 illustre en perspective le dispositif lors de son utilisation.

La figure 2a illustre le dispositif en vue de face.

La figure 2b illustre le dispositif en vue de côté.

La figure 3 représente en vue de côté le dispositif dans une position de rangement.

La figure 4 représente en vue de face selon F le dispositif dans sa position de rangement.

La figure 4a est une vue de dessus.

La figure 5 illustre en perspective l'utilisation du dispositif sur un chariot non équipé de système de consigne.

Les figures 6a à 6d illustrent le fonctionnement du dispositif en vue de dessus.

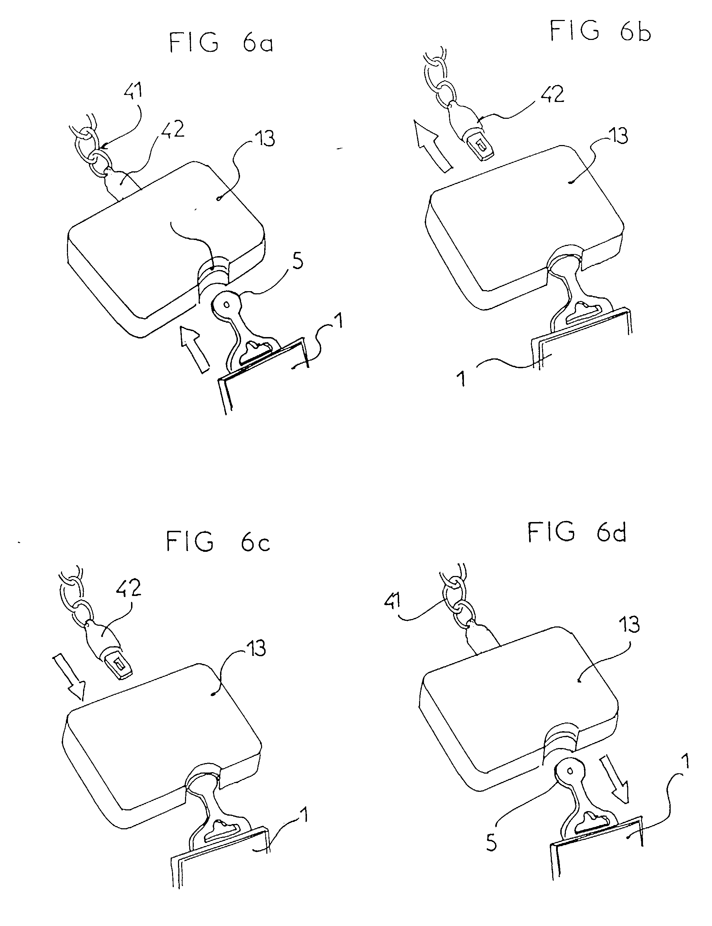

La figure 6a représente l'introduction du jeton de consigne.

La figure 6b représente la libération du chariot.

La figure 6c illustre la remise en place du chariot.

La figure 6d illustre la restitution du dispositif.

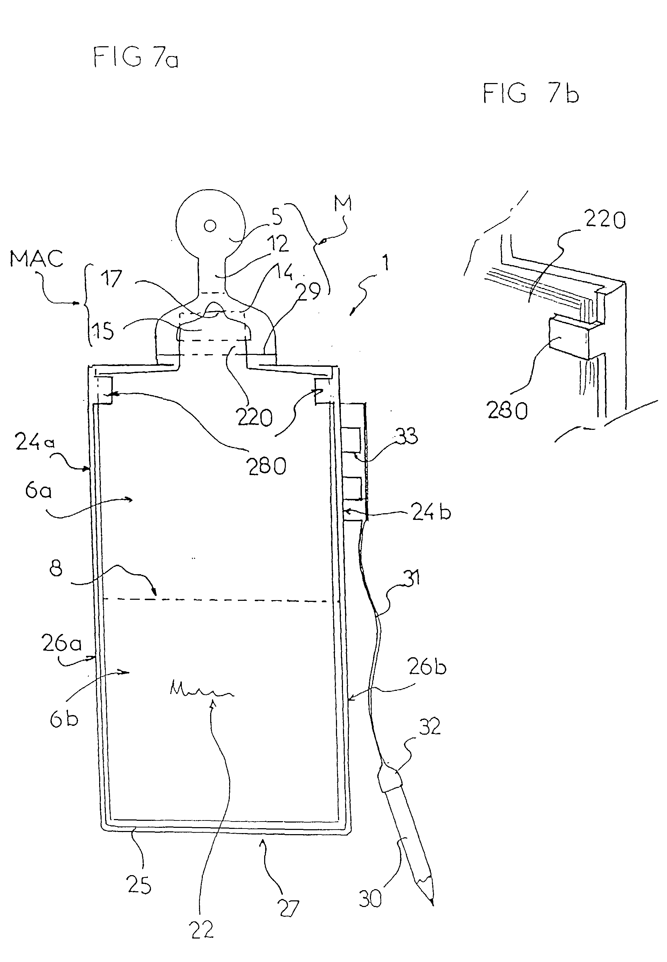

Les figures 7a et 7b illustrent une variante d'exécution.

Le support pour liste d'achats selon l'invention portant la référence générale (1) comporte des moyens d'accrochage et de verrouillage (MAV) destinés à permettre la libération d'un chariot de magasin (2) équipé d'un système de consigne (13), son accrochage à un chariot, et son verrouillage audit chariot, de façon à éviter son décrochement accidentel ou son vol, ainsi que sa restitution automatique lors de la fin de l'utilisation du chariot.

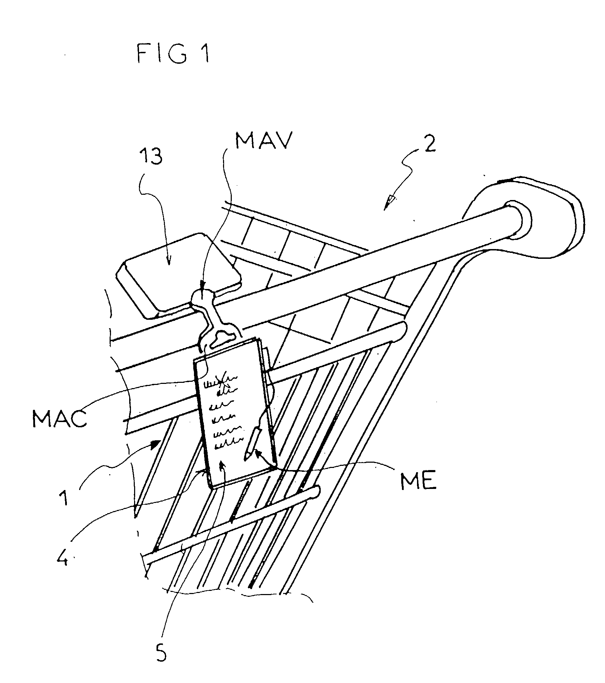

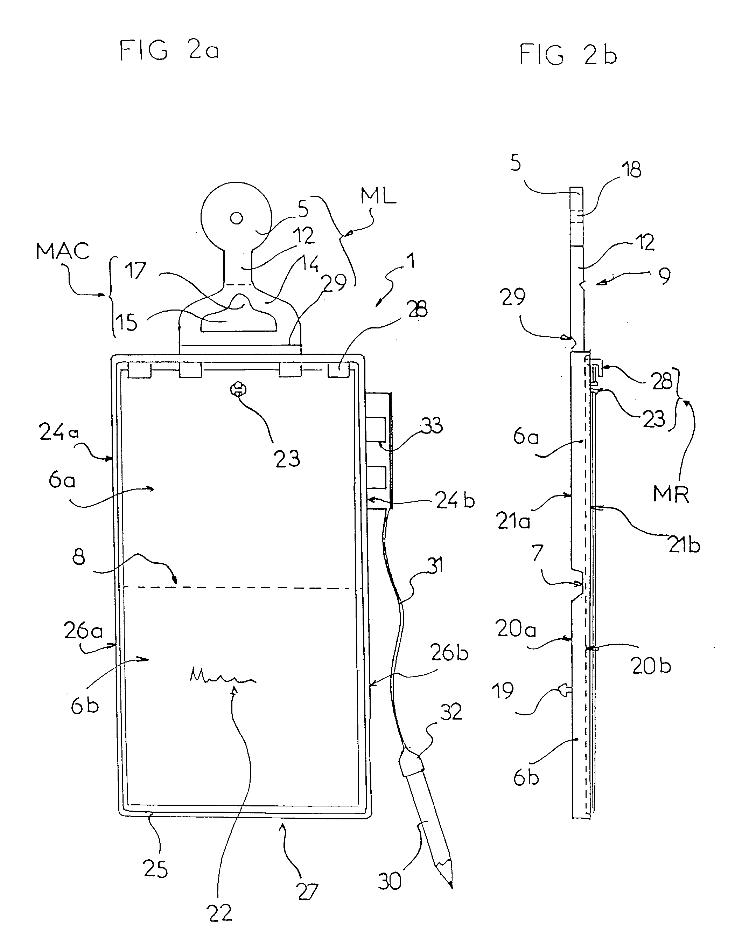

Le support pour liste d'achats (1) selon l'invention comporte un support de liste formé par un corps (4). Ledit support peut être mis en place et/ou verrouillé sur le chariot de magasin (2) grâce aux moyens d'accrochage et de verrouillage (MAV), comme le montre la figure 1. Lesdits moyens d'accrochage et de verrouillage (MAV) sont constitués par un jeton ou une pièce de consigne (5) solidaire du corps de support (4) par l'intermédiaire de moyens de liaison (ML), tel qu'illustré figure 2a, ledit jeton ou pièce étant destiné à coopérer avec le système de consigne (13) des chariots de magasin (2) afin de permettre la libération d'un chariot, l'accrochage du dispositif et son verrouillage au cours de l'utilisation du chariot et sa restitution automatique en fin d'utilisation. L'introduction du jeton (5) dans la fente (40) du système de consigne (13) prévue à cet effet permet, comme le montrent les figures 6a et 6b, de libérer.le chariot (2) qui était précédemment attaché par la chaîne (41) et l'embout de cadenassage (42). Le jeton étant solidaire du corps de dispositif (4), celui-ci est ainsi accroché et verrouillé ; lors de la remise en place du chariot, comme le montrent le figures 6c et 6d, l'insertion de l'embout (42) provoque la restitution automatique à l'usager du dispositif.

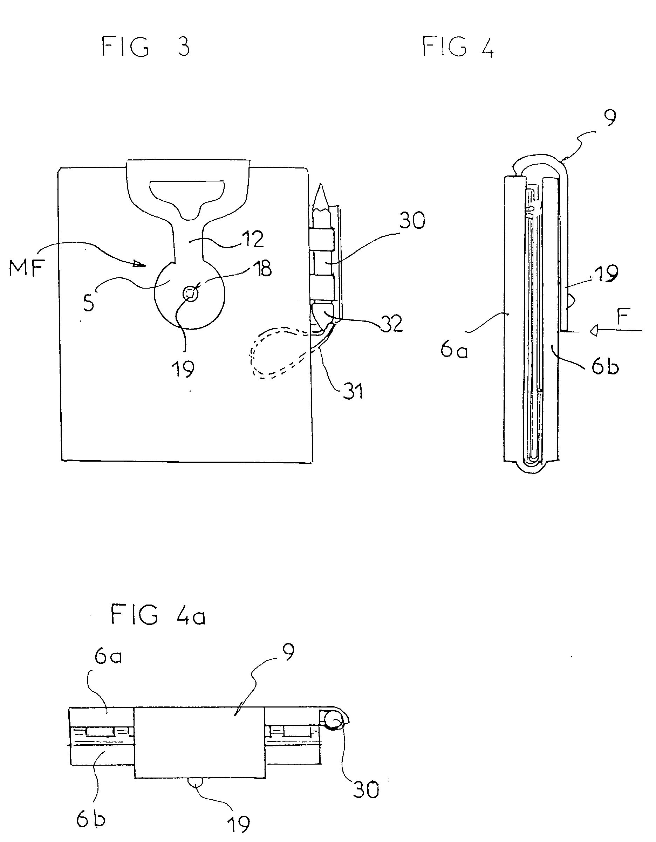

Selon le mode de réalisation préféré de l'invention, le support pour liste d'achats (1) comporte un corps (4) composé de deux portions de plaques qui se prolongent entre elles, une portion de plaque supérieure (6a), une portion de plaque inférieure (6b), articulées entre elles grâce à des moyens d'articulation pouvant être formés avantageusement par un rétrécissement de section (7) entre les deux portions de plaques (6a, 6b) du corps, ledit rétrécissement de l'épaisseur de la section permet de former une rainure de pliage (8) transversale située entre les portions de plaque (6a, 6b), comme le montrent les figures 2b et 3. Selon le mode de réalisation préféré, lesdites portions de plaque sont avantageusement de forme rectangulaire et de même dimension, les moyens d'articulation leur permettant ainsi de se superposer afin de diminuer leur encombrement lors du rangement. Il va de soi que ledit corps pourrait être composé d'une seule portion de plaque ou de trois portions ou plus, sans pour autant sortir du champ de protection de l'invention. De même, la ou les portion(s) de plaque pourrai(en)t être de forme et/ou de taille différente.

Selon le mode de réalisation préféré de l'invention, la plaque supérieure (6a) du corps (4) est prolongée par une languette de fixation (9) qui s'étend longitudinalement depuis le bord supérieur (10) de ladite plaque. Ladite languette de fixation (9) porte à son extrémité supérieure (11) les moyens d'accrochage et de verrouillage (MAV) constitués par le jeton de consigne (5). Elle forme ainsi les moyens de liaison (ML). La languette de fixation est constituée par une base (14) prolongeant le bord supérieur (10) de la portion de plaque (6a), ladite base étant prolongée par une patte de préhension (12) qui porte à son extrémité (11) ledit jeton (5). La patte de préhension (12) peut avantageusement être rigide afin de permettre une manipulation plus aisée du jeton (5) pour son introduction dans le système de consigne (13) du chariot (2). De plus, ladite patte peut être articulée transversalement par rapport à la base (14), de manière à permettre au corps (4) du dispositif (1) de se positionner verticalement sous l'effet de son propre poids. Notons que les moyens de liaison (ML) pourraient prendre d'autres formes comme, par exemple, être un lien souple, sans pour autant sortir du champ de protection de l'invention.

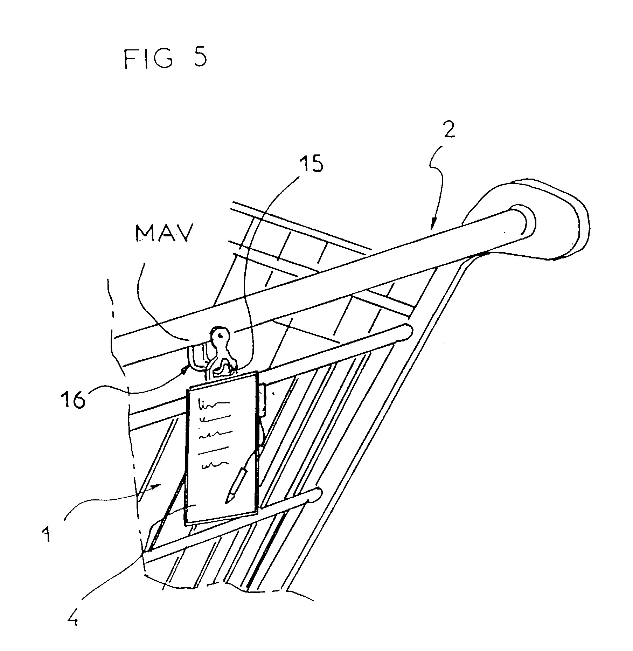

Selon le mode de réalisation préféré, le dispositif (1) comporte des moyens d'accrochage complémentaires (MAC) destinés à permettre sa mise en place sur des chariots de magasin (2) ne possédant pas de système de consigne (13), comme le montre la figure 5, lesdits moyens étant constitués par une encoche ou fente d'accrochage (15) située, par exemple, transversalement sur la base (14) de la languette de fixation (9) et destinée à s'enfiler sur les crochets (16) situés à l'arrière desdits chariots. La fente (15) comporte également sur son bord supérieur une encoche complémentaire (17) destinée à coopérer avec un crochet ou un clou d'un mur, pour le rangement du dispositif (1) au domicile de son utilisateur.

Le dispositif comporte également des moyens de fermeture (MF) destinés à permettre de fixer entre elles les deux portions de plaque (6a, 6b) lorsqu'elles sont superposées, comme le montrent les figures 3 et 4. Selon le mode de réalisation préféré, lesdits moyens de fixation (MF) sont constitués par un trou (18) disposé avantageusement dans le jeton de consigne (15) et qui est destiné à coopérer avec un téton de fermeture (19) situé sur la face externe (20a) de la plaque inférieure (6b) de façon à former une liaison de type bouton pression, par exemple. Notons que le jeton de consigne (5) porté par la languette de fixation (9) peut venir coopérer avec le téton de fermeture (19) grâce à l'articulation transversale de fermeture (29) obtenue avantageusement par une rainure de pliage entre la portion de plaque supérieure (6a) et la base (14) de la languette (9) comme le montre la figure 2a. Notons, par ailleurs, que le trou du jeton de consigne pourrait coopérer avec un téton d'accrochage situé sur une des faces externes de manière à former une boucle d'accrochage constituant un moyen d'accrochage lors de l'utilisation d'un chariot non équipé de système de consigne. Il va de soi que lesdits moyens de fermeture (MF) pourraient être constitués par des systèmes différents sans pour autant sortir du champ de protection de l'invention.

Le support pour liste d'achats (1) comporte des moyens de retenue (MR) destinés à permettre la fixation d'une feuille ou d'un bloc de feuilles (22) contre les faces internes (20b, 21b) des portions de plaque (6a, 6b) du corps (4). Les faces internes (20b, 21b) étant des faces qui se font vis-à-vis lorsque l'on superpose les portions de plaques grâce à la rainure de pliage (8). Il comporte, en outre, des moyens d'écriture (ME) destinés à permettre à l'utilisateur d'annoter ou de rayer sa liste d'achats directement sur le bloc de feuilles (22), les deux portions de plaques (6a, 6b) servant de support ou de sous-main pour l'utilisateur par le biais de leur faces internes (20b, 21b).

Selon le mode de réalisation préféré de l'invention, les moyens de retenue (MR) sont constitués par un téton de maintien (23) avantageusement fendu, situé sur la face interne (21b) de la portion de plaque supérieure (6a) légèrement en-dessous de son bord supérieur (10) et centré par rapport aux bords latéraux (24a, 24b) de ladite portion de plaque. De plus, afin d'éviter le pivotement intempestif de la feuille ou du bloc de feuilles (22) ancré sur le téton de maintien (23), le corps (4) est muni sur les faces internes (20b, 21b) des deux portions de plaque (6a, 6b) d'un rebord périphérique (25) faisant saillie vers l'avant (AV) et s'étendant le long du bord supérieur (10) de la portion de plaque supérieure (6a) puis le long des bords latéraux (24a, 24b) et (26a, 26b) des deux portions de plaque et enfin le long du bord inférieur (27) de la portion de plaque inférieure (6b). En outre, les faces internes (20b, 21b) peuvent également être munies de cornières de retenue (28) disposées le long de la bordure périphérique (25). Lesdites cornières s'étendent vers l'avant (AV) et possèdent un profil en L orienté vers l'intérieur du corps de manière à ce qu'elles puissent empêcher le bloc de feuilles (22) de sortir du téton de maintien (23) et de s'échapper ainsi vers l'avant. Selon le mode de réalisation illustré, lesdites cornières (28) sont au nombre de quatre et sont disposées le long du bord supérieur (10), de part et d'autre du téton de maintien (23). Il va de soi que les moyens de retenue (MR) pourraient être obtenus de nombreuses façons comme par pincement ou par patte métallique déformable, sans pour autant sortir du champ de protection de l'invention.

Selon le mode de réalisation préféré de l'invention, les moyens d'écriture (ME) sont constitués par un crayon (30) ou autre, tel qu'un feutre ou un stylo bille, par exemple. Ledit crayon (30) peut être solidarisé au dispositif (1) par l'intermédiaire d'un lien souple (31) qui lui autorise une liberté de mouvement suffisante pour pouvoir écrire aux différents endroits du corps sans aucune gêne. Notons que ce lien souple (31) peut comporter à son extrémité (34) des moyens d'adaptation (32) permettant d'y fixer des crayons de plusieurs diamètres différents comme, par exemple, un capuchon en matière élastiquement déformable. De plus, le dispositif est muni d'un passant ou d'un fourreau porte-crayon (33) permettant le rangement du crayon ou stylo (30). Notons, en outre, que le lien souple peut être légèrement contraint ou précontraint à l'extrémité (35) de fixation sur le corps (4) de manière à ce que, lors du rangement du crayon (30) dans le fourreau (33), le lien souple (3]) se mette automatiquement en place contre l'une des faces internes (20b, 21b) des portions de plaque (6a, 6b). De cette façon, lorsque l'on superpose lesdites portions de plaque et que l'on met en place les moyens de fermeture (ME), le lien souple se loge entre les deux faces internes.

Selon un deuxième mode de réalisation non représenté, le dispositif (1) est sensiblement identique au premier mode de réalisation. Il comporte également des moyens d'accrochage et de verrouillage (MAV) similaires. Il est avantageusement réalisé dans une matière sur laquelle il est possible d'écrire et d'effacer, comme sur certains plastiques, par exemple. Ainsi, l'utilisateur pourra écrire à l'aide des moyens d'écriture (ME) directement sur le corps (4) du dispositif et effacer à l'aide d'un chiffon sec ou humide ou légèrement alcoolisé. Selon ce mode de réalisation, les moyens d'écriture (ME) peuvent être constitués par un crayon, un feutre ou un stylo spécifique adapté à la matière dudit corps. Selon ce deuxième mode de réalisation, le dispositif (1) ne nécessite pas de moyens de retenue (MR) du bloc de feuilles (22) et il n'est donc pas muni du rebord périphérique (25), du téton de maintien (23) et des cornières périphériques (28). Cependant, selon un perfectionnement, les deux modes de réalisations peuvent être combinés afin d'obtenir un dispositif utilisable soit avec un bloc de feuilles (22), soit en écrivant directement sur le corps (4) du dispositif (1).

Les figures 7a et 7b sont des vues illustrant une variante d'exécution pour les moyens de retenue (MR) pour les feuillets (22), selon lesquelles le téton (23) du mode de réalisation précédent est supprimé, les feuillets (22) étant retenus par engagement d'une patte supérieure (220) dans le trou (15) et par des cornières de retenue latérale (280).

Bien entendu, l'invention n'est pas limitée aux modes de réalisation décrits et représentés à titre d'exemples, mais elle comprend aussi tous les équivalents techniques ainsi que leurs combinaisons.

## Revendications

1. Support pour liste d'achats (1) comportant un corps de dispositif (4) destiné à pouvoir être accroché à un chariot de magasin (2) équipé d'un système de consigne (13), caractérisé en ce qu'il comporte des moyens d'accrochage et de verrouillage (MAV) destinés à permettre la libération du chariot (2), l'accrochage dudit dispositif (1), et son verrouillage audit chariot lors de l'utilisation de celui-ci et la restitution automatique du dispositif à l'usager par son déverrouillage lors de la remise en place dudit chariot.

2. Support pour liste d'achats (1) selon la revendication 1, caractérisé en ce que les moyens d'accrochage et de verrouillage (MAV) sont constitués par un jeton ou pièce de consigne (5) solidaire dudit dispositif destiné à coopérer avec un système de consigne (13) d'un chariot de magasin (2).

3. Support pour liste d'achats (1) selon la revendication 2, caractérisé en ce qu'il comporte des moyens de liaison (ML) permettant de solidariser le jeton de consigne (5) au corps (4) du dispositif (1).

4. Support pour liste d'achats (1) selon la revendication 3, caractérisé en ce que les moyens de liaison (ML) sont constitués par une languette de fixation (9) comportant des moyens d'accrochage complémentaires (MAC) constitués par une fente (15) transversale destinée à permettre l'accrochage du dispositif (1) à des chariots (2) non équipés de système de consigne.

5. Support pour liste d'achats (1) selon l'une quelconque des revendications précédentes, caractérisé en ce qu'il comporte :
- un corps de dispositif (4) constitué d'au moins deux portions de plaque (6a, 6b), de formes sensiblement identiques, articulées entre elles de manière à pouvoir se superposer en apposant leurs faces internes (20b, 21b) l'une contre l'autre,
- des moyens d'écriture (ME).

6. Support pour liste d'achats (1) selon la revendication 5, caractérisé en ce que le corps de dispositif (4) est réalisé dans un matériau sur lequel il est possible d'écrire et d'effacer son écriture en utilisant soit des moyens d'écriture (ME) spécifiques audit matériau, soit des moyens d'écriture classiques.

7. Support pour liste d'achats (1) selon l'une quelconque des revendications 5 ou 6, caractérisé en ce qu'il comporte des moyens de retenue (MR) destinés à permettre la fixation d'une feuille ou d'un bloc de feuilles (22) contre au moins une des faces internes (20b, 21b) des portions de plaques (6a, 6b).

8. Support pour liste d'achats (1) selon les revendications 3 et 5, caractérisé en ce que le jeton de consigne (5) est muni d'un trou (18) destiné à coopérer avec un téton de fermeture (19) disposé sur une des portions de plaque (6a, 6b), de manière à permettre l'immobilisation desdites portions de plaque lorsqu'elles sont en position superposée.
